**Europäisches Patentamt**

**European Patent Office**

**Office européen des brevets**

(19)

(11) Veröffentlichungsnummer : **0 235 184 B1**

# (12) EUROPÄISCHE PATENTSCHRIFT

(45) Veröffentlichungstag der Patentschrift :
20.02.91 Patentblatt 91/08

(21) Anmeldenummer : 86904814.0

(22) Anmeldetag : 29.07.86

(86) Internationale Anmeldenummer :
PCT/EP86/00446

(87) Internationale Veröffentlichungsnummer :
WO 87/01439 12.03.87 Gazette 87/06

(51) Int. Cl.⁵ : **G01B 11/27**

## (54) VORRICHTUNG ZUM FESTSTELLEN UND ÜBERWACHEN VON ÄNDERUNGEN DER POSITION VON WELLEN.

(30) Priorität : 04.09.85 DE 3531615

(43) Veröffentlichungstag der Anmeldung :
09.09.87 Patentblatt 87/37

(45) Bekanntmachung des Hinweises auf die
Patenterteilung :
20.02.91 Patentblatt 91/08

(84) Benannte Vertragsstaaten :
DE FR GB IT

(56) Entgegenhaltungen :
WO-A-84/04960
DE-B- 1 273 206
US-A- 3 323 408
US-A- 3 443 872

(73) Patentinhaber : PRÜFTECHNIK DIETER
BUSCH + PARTNER GmbH & CO
Oskar-Messter-Strasse 19-21
D-8045 Ismaning (DE)

(72) Erfinder : LYSEN, Heinrich
Kirchenstrasse 95
D-8000 München 80 (DE)
Erfinder : BUSCH, Dieter
Am Isarberg 1
D-8045 Ismaning (DE)
Erfinder : WAGNER, Karl
Wackneroderstrasse 8
D-8000 München 83 (DE)

(74) Vertreter : Hieke, Kurt
Stadlerstrasse 3
D-8013 Haar bei München (DE)

**Beschreibung**

Die Erfindung bezieht sich auf eine Vorrichtung gemäß dem einleitenden Teil des Patentanspruchs 1.

Vorrichtungen dieser Art sind bekannt (WO 84/04960). Sie dienen dazu, den Fluchtungszustand zweier hintereinander angeordneter Wellen festzustellen. Bei den bekannten Vorrichtungen ist auf der einen Welle ein Strahlsender mit einem zugehörigen Strahlempfänger und auf der anderen Welle ein entsprechend darauf ausgerichtetes Prisma angeordnet, wobei der Strahlsender den Lichtstrahl permanent auf das Prisma richtet und dieses den Lichtstrahl permanent zum Strahlempfänger reflektiert. Den rotierenden Wellen ist ein besonderer Taktgeber zugeordnet, mit dessen Hilfe erreichbar ist, daß die von dem Strahlempfänger bereitgestellten, für die Lage des Lichtstrahlauftreffpunktes maßgeblichen Ausgangssignale nur in vorgegebenen, in Umfangsrichtung der Wellen um 90° versetzten Winkelpositionen der Wellen zur Auswertung herangezogen werden. Neben dem Taktgeber sind Übertragungseinrichtungen wie Schleifringe mit Kontaktbürsten, aus einem Rotor und einem Stator bestehende Übertrager od. dgl. aufwendige und störanfällige Übertragungsmittel zur Übertragung der vom Strahlempfänger gelieferten Ausgangssignale von der rotierenden einen Welle zu der Auswerteinrichtung nötig

Aus der DE-B-1 273206 ist eine Einrichtung bekannt, die es ermöglicht, die drei gegenseitigen Winkellagen zweier hintereinander angeordneter Wellen, die beide gegenüber einem gemeinsamen Bezugssystem gleichsinnig synchron rotieren, zu messen bzw. einzustellen. Diese Einrichtung besteht aus je einem an der einen bzw. anderen Welle stirnseitig sowie senkrecht zur Drehachse angeordneten Spiegelgitter und einem Prisma, das zwischen den Wellen angeordnet ist und dessen aufeinander senkrechte Spiegelflächen von einem Autokollimator ausgehendes, paralleles Licht auf die beiden Spiegelgitter umlenken und das von diesen reflektierte bzw. gebeugte Licht gleichzeitig in den Autokollimator zurückreflektieren, um die von den beiden Spiegelgittern erzeugten Beugungsbilder auf der Meßplatte eines Fernrohrs zu überlagern. Die bekannte Einrichtung erfordert eine freie Zugänglichkeit zu den einander gegenüberstehenden Stirnflächen der beiden Wellen, um die Spiegelgitter anbringen und beobachten zu können, und einen beträchtlichen freien Raum zwischen diesen Wellenstirnflächen für die Anordnung des raumfesten Prismas. Eine solche Zugänglichkeit ist aber häufig nicht gegeben, z.B. dann nicht, wenn die Wellen miteinander gekuppelt sind. Außerdem bezieht diese bekannte Meßeinrichtung nicht in eindeutiger Weise auch einen Parallelversatz in die Messung mit ein.

Der Erfindung liegt die Aufgabe zugrunde, eine Vorrichtung gemäß dem einleitenden Teil des Haupttanspruchs so zu gestalten, daß die bisher nötigen aufwendigen und störanfälligen Mittel zum Übertragen der empfängerseitigen Positionssignale von einer rotierenden Welle zu der Auswerteinrichtung entfallen können

Die vorgenannte Aufgabe wird durch die Mermale des Patentanspruchs 1 gelöst.

Bei der erfindungsgemäßen Vorrichtung brauchen keine elektrischen Positionssignale von einer rotierenden Welle zu einer feststehenden Auswerteinrichtung übertragen zu werden, und es ist auch nicht nötig, elektrische Energie zur Versorgung irgendwelcher elektrischer Verbraucher, die auf einer rotierenden Welle angeordnet sind, zu übertragen, weil von der aus den Strahlsendern, den Strahlempfängern und dem Prisma bzw. den Prismen bestehenden Abtastvorrichtung nur das Prisma bzw. die Prismen mit der Welle rotieren, während die Strahlsender und die Strahlempfänger ortsfest angeordnet sind. In jeder Meßwinkelposition erhält der Strahlempfänger beim Durchlauf eines zugehörigen Prismas durch diese Meßwinkelposition hindurch kurzzeitig die auf die letztere bezogene Information über die Lage der Drehachse der Welle bezüglich der Ausgangslage durch den bei diesem Durchlauf entstehenden, abhängig von der Position des Prismas gegenüber dem Lichtstrahl reflektierten Reflexionsstrahl, also durch eine kurzzeitige optische Abtastung des rotierenden Prismas von einem ortsfesten Standort her. Der Reflexionsstrahl vermittelt diese Information ebenso wie bei den bekannten gattungsgemäßen Vorrichtungen in einer Weise, die eine unmittelbare Aufteilung nach Parallelversatz und nach Winkelversatz ermöglicht. Es wird praktisch die Lage jeder Welle für sich bezugssystembezogen überwacht, und die dabei systemfest entstehenden elektrischen Lagesignale können zur Überwachung der Wellenlage und Feststellung von auftretenden Ablagen von der Ausgangslage mit gespeicherten Ausgangssignalen verglichen werden. Dadurch wird eine gegenüber der bekannten gattungsgemäßen Vorrichtung wesentlich gesteigerte Betriebssicherheit erzielt.

Die erfindungsgemäße Vorrichtung eignet sich zur Überwachung einzelner Wellen in einem Bezugssystem, ohne daß die jeweilige Welle von der Stirnseite her zugänglich sein müßte, und aus dem letztgenannten Grunde auch zur Überwachung des Fluchtungszustandes zweier mit im wesentlichen fluchtenden Längsachsen hintereinander angeordneter Wellen, z.B. der elastisch miteinander gekuppelten Wellen von zwei im gegenseitigen Abstand gesondert montierten Maschinen gegenüber der Ausgangslage. Der etwas höhere Aufwand, der sich im letzteren Falle durch die Verwendung einer größeren Anzahl von Prismen sowie von Strahlempfängern und Strahlsendern gegenüber der bekannten gattungsgemäßen Vorrichtung ergibt, wird bei weitem durch den Fortfall von Mitteln zur Stromversorgung mit der Welle rotierender elektrischer und elektronischer Einrichtungen und zur Übertragung elektrischer Ausgangssignale von diesen zu feststehenden Auswerteinrichtungen aufgewogen.

Der abhängige Patentanspruch 2 betrifft die gegenständliche Realisierung einer für die Dauerüberwachung des Fluchtungszustandes hintereinander angeordneter Wellen eingerichteten erfindungsgemäßen Vorrichtung nach Patentanspruch 1.

Die abhängigen Patentansprüche 2 bis 5 betreffen bevorzugte Ausgestaltungen der Vorrichtung nach Anspruch 2.

Die abhängigen Patentansprüche 6 und 7 haben weitere bevorzugte Ausgestaltungsmerkmale der Vorrichtung nach Anspruch 1 zum Gegenstand.

Die Erfindung wird nachstehend anhand der Zeichnung an Ausführungsbeispielen noch näher erläutert.

In der Zeichnung zeigt

Fig. 1 eines der bei der erfindungsgemäßen Vorrichtung zum Einsatz gelangenden rechtwinkligen Prismen in Seitenansicht sowie in verschiedenen Winkelpositionen bezüglich des einfallenden Lichtstrahls,

Fig. 2 das Prisma gemäß Fig. 1 in Ansicht von oben in zwei verschiedenen Winkelpositionen bezüglich des einfallenden Lichtstrahls,

Fig. 3 eine bei der erfindungsgemäßen Vorrichtung als Strahlsender eingesetzte Laserdiode in Ansicht von der Seite,

Fig. 4 die Laserdiode nach Fig 3 in Frontansicht mit Blickrichtung auf den Strahlausgang,

Fig. 5 einen bei der erfindungsgemäßen Vorrichtung als Strahlempfänger eingesetzten analogen photoelektrischen Halbleiter-Positions-Detektor im Schnitt zur Darstellung des Funktionsprinzips,

Fig. 6 den Positions-Detektor nach Fig. 5 in zweiachsiger Ausführung von vorn gesehen,

Fig. 7 den Querschnitt durch den Detektor gemäß Fig. 6 entlang der Schnittlinie V-V in Fig. 6,

Fig. 8 eine erste bevorzugte Ausführungsform der erfindungsgemäßen Vorrichtung in schematischer, perspektivischer Darstellung,

Fig. 9 das zu der Ausführungsform gemäß Fig. 8 gehörende Signaldiagramm der von den Strahlempfängern gelieferten Ausgangssignale,

Fig.10 eine weitere Ausführung der erfindungsgemäßen Vorrichtung schematisch in perspektivischer Darstellung, und

Fig. 11 das zu der Ausführung nach Fig. 10 gehörende Signaldiagramm.

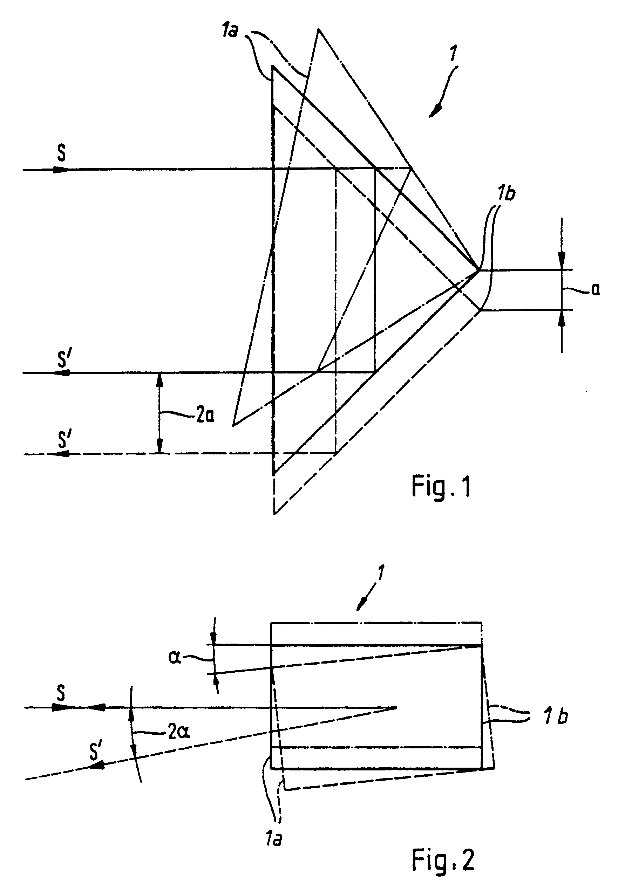

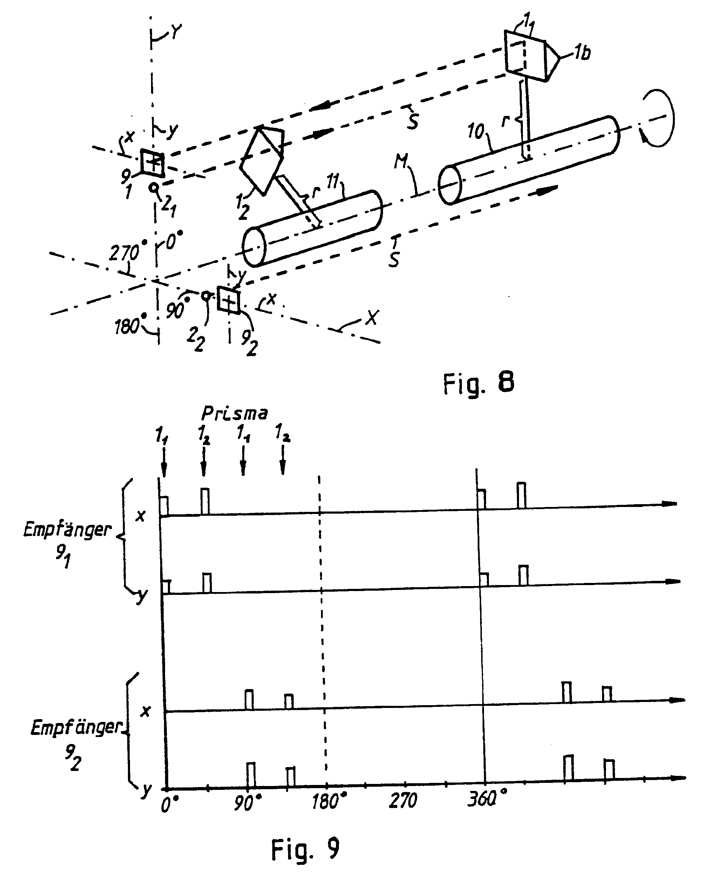

Bei den nachstehend weiter unten erläuterten Ausführungsformen der erfindungsgemäßen Vorrichtung kommen jeweils rechtwinklige Prismen, Strahlsender und Strahlempfänger zum Einsatz, die vorweg hinsichtlich ihres Aufbaus und ihrer Arbeitsweise anhand der Figuren 1-7 erläutert werden, damit danach die Funktionsweise der verschiedenen bevorzugten Ausführungsformen der Erfindung gemäß den Fig. 8-11 besser verständlich ist.

Wenn auf das in den Figuren 1 und 2 dargestellte Prisma 1 ein Lichtstrahl S senkrecht zur Hypotenusenebene 1a auftrifft, tritt er als Lichtstrahl S' auch wieder senkrecht dazu nach Reflektion an den Kathetenflächen aus. Dies gilt für die Lichtstrahlmittelachsen auch dann, wenn eintretender und austretender Strahl teilweise zusammenfallen, was beispielsweise geschehen kann, wenn der einfallende Strahl S einen relativ großen Durchmesser hat und in den Scheitel des Prismas einfällt. Wird das Prisma 1 um eine zur Scheitellinie 1b, d.h. zur Zeichenebene der Fig. 1, senkrechte Achse verschwenkt, so ändert dies nichts an den Reflektionsverhältnissen. Eine Änderung des Lichteinfallswinkels in der Zeichenebene der Fig. 1 hat also auf die Reflektionsverhältnisse keinen Einfluß.

Eine Verschiebung des Prismas in einer Richtung parallel zur hypotenusenebene 1a und parallel zur Zeichenebene der Fig. 1 wirkt sich demgegenüber in doppelter Größe auf den Abstand zwischen eintretendem und austretendem Lichtstrahl aus.

Andererseits kommt es bei einem Verschwenken des Prismas 1 um eine zur Scheitellinie 1b senkrechte sowie zur Hypotenusenebene 1a parallele Achse zu einer Änderung des Reflektionswinkels in Richtung senkrecht zur Zeichenebene der Fig. 1 in bezüglich der Verschwenkung doppeltem Ausmaß, wie dies in Fig. 2 dargestellt ist.

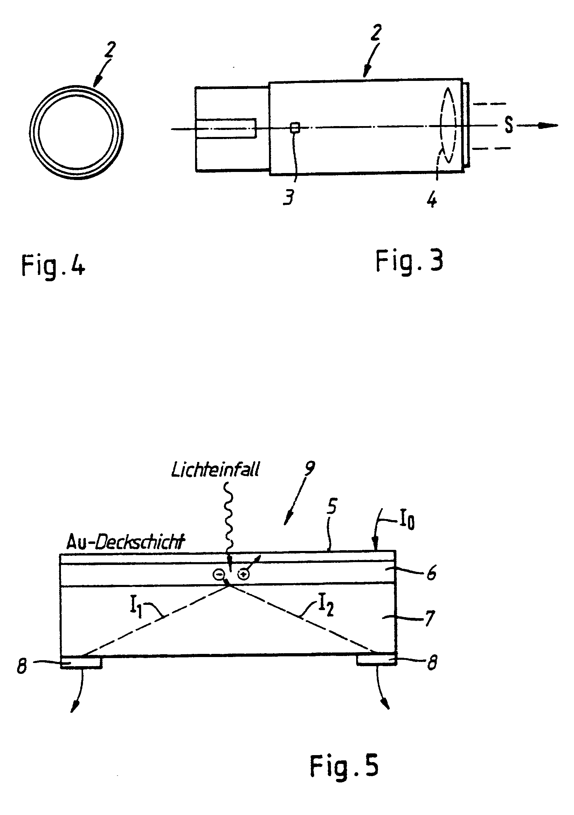

Ein für die Erzeugung des Lichtstrahls S geeigneter Strahlsender ist in Fig. 3 und 4 schematisch wiedergegeben.

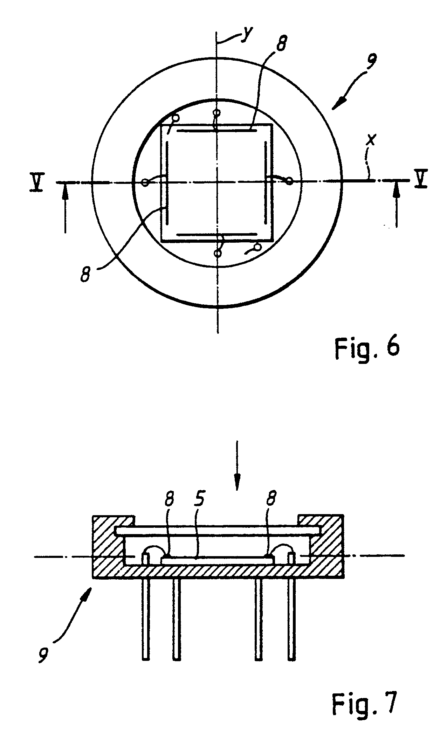

Der Strahlsender 2 gemäß diesen Figuren weist einen Laserkristall 3 und eine Kollimatorlinse 4 auf und vermag einen Lichtstrahl S von äußerst geringer Divergenz in der Größenordnung von 1 mrad zu erzeugen. Der bei den nachstehend erörterten Ausführungsformen der erfindungsgemäßen Vorrichtung verwendete Strahlempfänger kann gemäß Fig. 5-7 ein zweiachsiger, analoger photoelektrischer Halbleiterdetektor sein, der eine Deckschicht 5 aus Gold, darunter eine Verarmungszone 6, und, wiederum darunter, ein hochohmiges Substrat 7 aufweist, wobei der Gold-Deckschicht 5 ein Strom $I_o$ zugeführt wird und am hochohmigen Substrat seitlich wie oben und unten Kontaktstreifen 8 entlang des im wesentlichen quadratischen Querschnitts des Substrats angeordnet sind, über die der zugeführte Strom $I_o$ in Teilströme aufgeteilt abfließt. Die Aufteilung des Stromes $I_o$ richtet sich nach der Stelle des Lichteinfalls, an der ein Lichtstrahl auf die Gold-Deckschicht im wesentlichen senkrecht auftrifft. In der Ausführung nach Fig 6 und 7 als zweiachsiger Positionsdetektor wird der zugeführte Strom $I_o$ in vier Teilströme aufgeteilt, die über die einzelnen Kontaktstreifen 8 abfließen und hinsichtlich ihrer Größe von dem Abstand abhängen, den der Lichtstrahlauftreffpunkt vom Zentrum hat. Wenn der Lichtstrahl also genau in der Mitte der Deckschicht 5 auftrifft, sind die vier Teilströme untereinander gleich groß. Aus einer evtl. Stromdifferenz an den in Bezug aufeinander gegenüberliegenden Paaren von Kontaktstreifen 8 sind die rechtwinkligen Komponenten des Abstandes eines außermittigen Lichtauftreffpunktes von der Mitte des Koordinatensystems, das als zu der Gold-Deckschicht 5 parallelliegend zu verstehen ist, ablesbar.

Bei den nachstehend besprochenen Ausführungsbeispielen ist der Positionsdetektor gemäß den Fig. 5-7, der allgemein mit der Bezugszahl 9 bezeichnet ist, so angeordnet, daß sich die eine, der einen Koordinatenachse entsprechende Symmetrielinie (Fig.6) mindestens mit ihrem virtuellen Bild, d.h. virtuell, radial zu der Mittelachse der zugehörigen, zu überwachenden Welle erstreckt und die andere, der anderen Achse des Koordiantensystems entsprechende Symmetrielinie dazu senkrecht steht, d.h. zu einer zu der ausgewählten Radiallinie senkrechten Normaltangente an den Wellenumfang parallel liegt.

Bei der in den Fig. 8 und 9 wiedergegebenen bevorzugten Ausführungsform der erfindungsgemäßen Vorrichtung senden zwei um 90° in Umfangsrichtung der zu überwachenden, hintereinander liegenden und ursprünglich fluchtrecht ausgerichteten Wellen 10 und 11 versetzt angeordnete, ortsfeste Strshlsender $2_1$, $2_2$ der vorstehend geschilderten Art paralleles Licht etwa parallel zu den Wellen 10, 11 jeweils in Form eines Lichtstrahls S aus. Auf den Wellen 10, 11 ist jeweils ein Prisma $1_1$ bzw. $1_2$ der oben erörterten Art befestigt und so angeordnet, daß die in Umfangsrichtung der Wellen um 90° versetzten Lichtstrahlen etwa senkrecht auf die Hypotenusenebene der Prismen auftreffen, wenn die Prismen auf ihrer Kreisbahn um die Mittelachse der Wellen herum den jeweiligen Lichtstrahl kreuzen. Damit das in Richtung der Lichtstrahlen vorn liegende Prisma das dahinterliegende nicht verdeckt und so verhindert, daß jeder Lichtstrahl auch das hintere Prisma erreicht, sind die Prismen $1_1$ und $1_2$ in Umfangsrichtung der Wellen 10, 11 etwas gegeneinander versetzt (im Beispiel 45°).

Die Prismen $1_1$, $1_2$ reflektieren die Lichtstrahlen S aus den Sendern $2_1$ und $2_2$ auf zugeordnete Strahlempfänger $9_1$ und $9_2$ der vorstehend geschilderten Art, die mindestens virtuell so angeordnet sind, daß ihre eine Koordinatenachse mit der wellenbezogenen Radiallinie zusammenfällt, auf der der zugehörige Strahlsender $2_1$ bzw. $2_2$ liegt, während die andere Koordinatenachse jeweils dazu senkrecht ist. Die Strahlempfänger $9_1$ und $9_2$ sind im übrigen so angeordnet, daß der von den Prismen reflektierte, vom zugehörigen Lichtsender $2_1$ bzw. $2_2$ ausgesendete Lichtstrahl im ursprünglichen Fluchtungszustand der wellen im Koordinatenmittelpunkt oder wenigstens in dessen Nähe auf den Strahlempfänger auftrifft. Für eine diesbezügliche Justierung der Strahlempfänger können spezielle Justiermittel vorgesehen sein.

Justiermittel können auch an den Strahlsendern vorhanden sein, damit der Lichtstrahl optimal bezüglich der wellen und der Prismen ausgerichtet werden kann.

In Fig 8 befinden sich die Strahlempfänger $9_1$ und $9_2$ jeweils unmittelbar bei den zugehörigen Strahlsendern $2_1$ und $2_2$. Dies ist jedoch kein zwingendes Erfordernis. Die reflektierten Lichtstrahlen können auch über Umlenkspiegel od. dgl. zu einem anderen Aufstellungsort der Strahlempfänger $9_1$ und $9_2$ umgelenkt werden, sodaß lediglich dafür zu sorgen ist, daß der Strahlsender und der zugehörige Strahlempfänger wenigstens virtuell richtig aufeinander und auf die Prismen ausgerichtet sind.

Die Prismen $1_1$ und $1_2$ sind auf den Wellen 10 und 11 auch so angeordnet, daß ihr Scheitel 1b jeweils zu einer Normaltangente an den Wellenumfang parallel liegt, so daß sich eine Parallelverschiebung einer Welle in einer reinen Vergrößerung des Abstandes zwischen dem in ein Prisma einfallenden und dem daraus reflektierten Strahl und damit in einem Wandern des Lichtstrahlauftreffpunktes auf dem Strahlempfänger in Richtung parallel zu dessen radial liegender Koordinatenachse äußert, während eine Drehung der jeweiligen Welle um eine zur Wellenmittelachse senkrechte Achse die oben geschilderte Änderung des Winkels zwischen dem einfallenden und dem ausfallenden Lichtstrahl und damit ein Wandern des Lichtstrahlauftreffpunktes parallel zu der anderen Koordinatena-chse des Strahlempfängers ergibt. Die Art einer Veränderung des Auftreffpunktes im Strahlempfänger ist daher ein eindeutiges Kriterium dafür, ob es sich bei einer Veänderung der Wellenposition gegenüber dem zugehörigen Sender/Empfänger-Paar und letzlich gegenüber der anderen Welle um einen reinen Parallelversatz, einen reinen Winkelversatz oder um eine Kombination beider handelt. Da für jedes Prisma und damit für jede Welle die Messung in zwei um die jeweilige Welle herum um 90 ° versetzten Meßpositionen vorgenommen wird, kann aus den erhaltenen Meßwertpaaren jede Venvänderung der Wellenposition im Raume nach Art und Richtung eindeutig nach Koordinaten gesondert erkannt bzw. errechnet werden.

Das Ergebnis der Überwachung kann mittels in der Zeichnung nicht dargestellter Einrichtungen bekannter Art permanent zur Anzeige gebracht werden und/oder zur Bildung eine Warnsignals herangezogen werden, wenn ein sich einstellender Fluchtungsfehler zwischen den beiden Wellen eine kritische Größe erreicht hat.

Die von den Strahlempfangern für die x-Komponente und die y-Komponente des Abstandes des Lichtstrahlauftreffpunktes getrennt gelieferten elektrischen Positionssignale haben ihre Ursache darin, daß bei Auftreffen eines Lichtstrahls auf ein Prisma im Verlauf einer Umdrehung der Wellen 10, 11, der reflektierte Lichtstrahl kuzzeitig auf den zugehörigen Strahlempfänger auftrifft und impulsartige elektrische Signale entsprechend der Lage des Auftreffpunktes auslöst. Die zeitliche Folge dieser Impulse ist in dem Diagramm gemäß Fig. 9 nach den x- und y-Ausgängen der Strahlempfänger $9_1$ und $9_2$ getrennt für eine volle Wellenumdrehung wiedergegeben. Für die Überwachung kommt es nicht auf die absolute Größe dieser Impulse, sondern auf deren Änderung im Verlaufe des Betriebes der wellengekoppelten Maschinen an.

Das SE-Paar $2_1$ und $9_1$ mißt nach Lichtstrahlreflektion an einem der Prismen Verschiebungen der Welle längs der X-Achse eines raumfesten-Koordinatensystems, dessen Koordinatenachsen sich parallel zu den radialen Koordinatenachsen der beiden Strahlempfänger erstrecken und dessen Nullpunkt auf der Mittelachse der Wellen liegt, und es mißt des weiteren Drehungen um diese X-Achse.

Das SE-Paar $2_2$ und $9_2$ mißt analog Verschiebungen längs der Y-Achse dieses raumfesten Koordinatensystems und Drehungen um diese.

Durch die versetzte Anordnung der Prismen auf den beiden Wellen um den oben erwähnten Winkel, z.B. 45°, entsteht bei jeder Umdrehung der Wellen eine Folge von zwei Impulspaaren an jedem Strahlempfänger, und aus zeitlichen Veränderungen der Größe dieser Impulse kann nach dem in W084/04960 dargelegten bekannten Berechnungsweg der dafür ursächliche eingetretene Fluchtungsfehler nach Parallel- und Winkelversatz getrennt eindeutig verifiziert werden.

Die Amplituden der insgesamt acht Impulse pro Wellenumdrehung können zu Beginn der überwachung in einer Auswerteschaltung gespeichert werden, und es werden danach die späteren Impulshöhen automatisch damit verglichen, so daß es nicht darauf ankommt, die Strahlsender, Prismen und Strahlempfänger zu Beginn der überwachung so zu justieren, daß die reflektierten Lichtstrahlen genau im Koordinatenmittelpunkt auf die Strahlempfänger auftreffen.

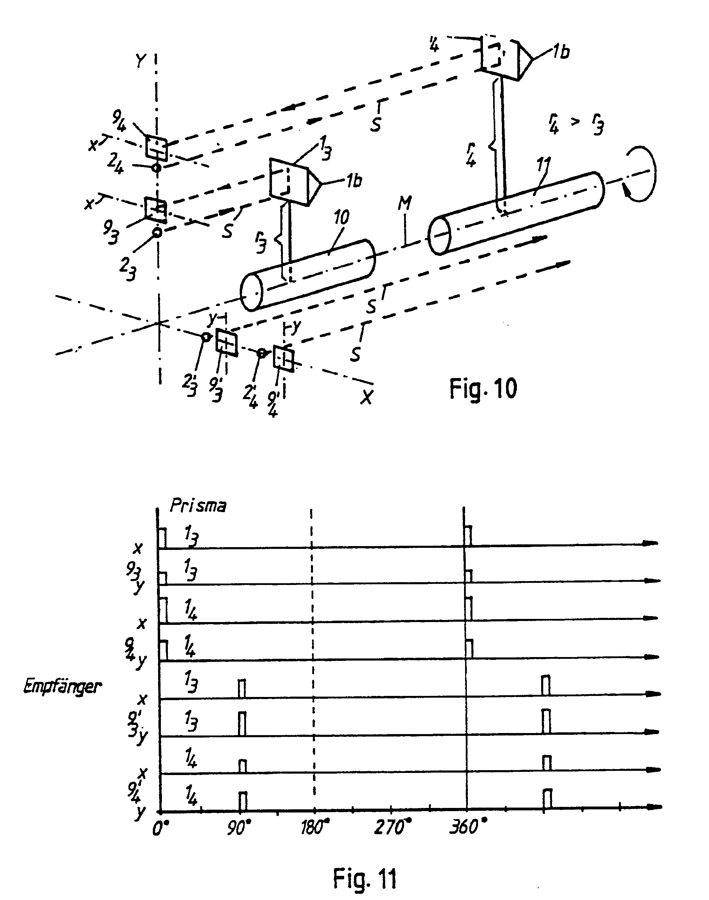

Die Fig. 10 und 11 sowie 12 und 13 geben schematisch zwei weitere Ausführungen der erfindungsgemäßen vorrichtung bzw. die zugehörigen Impulsdiagramme wieder.

Bei der Ausführung nach Fig. 10 und 11 ist wie bei der Ausführung nach Fig 8 und 9 auf jeder Welle 10, 11 je ein Prisma $1_3$, $1_4$ angeordnet, doch nehmen hier die Prismen die gleiche Winkelposition bezüglich der gemeinsam rotierenden Wellen ein und haben von den Wellen einen solchen unterschiedlichen Abstand, daß sie einander nicht verdecken. Jedem Prisma $1_3$ und $1_4$ sind zwei um 90° versetzte eigene SE-Paare $2_3$, $9_3$ und $2_3'$, $9_3'$ bzw. $2_4$, $9_4$ und $2_4'$, $9_4'$ zugeordnet, an seren Empfängerausg-ängen die Impulse in der aus Fig. 11 ersichtlichen zeitlichen Folge auftreten.

Die Prismen 13 und 14 könnten zusammen mit ihren zugehörigen SE-Paaren $2_3$, $9_3$, $2_3'$, $9_3'$ bzw. $2_4$, $9_4$, $2_4'$, $9_4'$, auch gegeneinander im Winkel versetzt sein. In diesem Falle würden die Signalpaare an den x- und y-Ausgängen der einzelnen Strahlenempfänger alle zeitlich nacheinander auftreten.

Es ist auch vorteilhaft, daß bei den vorstehend geschilderten Ausführungsformen infolge der besonderen Anordnung der Prismen und der SE-paare zwischen dem Auftreten des ersten Impulses und den Erscheinen des letzten Impulses der pro Wellenumdrehung erzeugten Impulsgruppe die Zeitspanne kleiner ist als diejenige zwischen diesem, letzten Impuls und dem, Wiedererscheinen des ersten Impulses, weil dadurch Impulsgruppenbeginn und -ende und daraus wiederum die Zugehörigkeit der einzelnen Impulse zu den verschiedenen Strahlempfängern und deren Ausgängen ohne zusätzliche Mittel wie Taktgeber und dgl. eindeutig ablesbar sind.

Da jede Welle 10, 11 praktisch für sich in dem Bezugssystem X, Y, M überwacht wird, ist es nicht prinzipiell nötig, den beiden Wellen ein gemeinsames Bezugssystem zuzuordnen. Es könnte vielmehr jede Welle auch ein eigenes Bezugssystem erhalten, in dem sie mit ihr zugewiesenen SE-Paaren zusammenarbeitet. Ein kritischer Zustand wäre in diesem Falle dadurch charakterisiert, daß sich die Lage der einen und/oder anderen Welle in ihrem jeweiligen Bezugssystem über eine zulässige Grenze hinaus verändert.

## Ansprüche

1. Vorrichtung zum Feststellen und Überwachen von Änderungen der Lage der Drehachse einer in einem festen räumlichen Bezugssystem rotierenden Welle gegenüber einer Ausgangslage, wobei zur gesonderten Feststellung eines eventuellen Parallelversatzes und eines eventuellen Winkelversatzes der Welle, in Meßpositionen, die im wesentlichen um 90° in Wellenumfangsrichtung versetzt sind, jeweils ein einen kleinen Durchmesser aufweisender, parallel gebündelter, außerhalb der Welle im wesentlichen parallel zu dieser ausgesendeter Lichtstrahl auf ein wellenfestes, dem Lichtstrahl mit seiner Hypotenusenebene zugewendetes, rechtwinkliges Prisma oder ein wie ein solches wirkendes optisches System gerichtet wird, dessen Scheitel sich im wesentlichen senkrecht zu einer Radialebene der Welle erstreckt und das den Lichtstrahl als Reflexionsstrahl direkt oder indirekt zu einem Strahlempfänger reflektiert, der zwei Signale erzeugt, die den Koordinaten x bzw. y des Abstandes des Auftreffpunktes des Reflexionsstrahls von dem Nullpunkt eines ebenen rechtwinkligen Koordinatensystems entsprechen, dessen Ebene - direkt oder virtuell -quer zur Wellendrehachse liegt, **dadurch gekennzeichnet, daß jeder**

Meßposition jeweils raumfest ein gesonderter Lichtstrahl (S) sowie ein gesonderter Strahlempfänger ($9_1$, $9_2$, $9_3$, $9_4$, $9'_3$, $9'_4$, der den beim Prismendurchlauf durch den Lichtstrahl (S) erzeugten Reflexionsstrahl (S') empfängt, zugeordnet sind.

2. Vorrichtung nach Anspruch 1 zum Feststellen und Überwachen von Änderungen der gegenseitigen Lage zweier mit im wesentlichen fluchtenden Drehachsen hintereinander angeordneter Wellen, z.B. der elastisch miteinander gekuppelten Wellen von zwei gesondert montierten Maschinen, gegenüber einer Ausgangslage, **dadurch gekennzeichnet**, daß auf jeder Welle (10, 11) mindestens ein mit zwei raumfesten Lichtstrahlen (S) und Strahlempfängern ($9_1$, $9_2$ ; $9_3$, $9_4$ ; $9'_3$, $9'_4$) zusammenwirkendes Prisma ($1_1$,$1_2$ ; $1_3$, $1_4$) angebracht ist.

3. Vorrichtung nach Anspruch 2, **dadurch gekennzeichnet**, daß die Prismen ($1_1$, $1_2$) von ihrer Welle (10 bzw. 11) im wesentlichen gleichen radialen Abstand haben, das Prisma ($1_1$) bzw. die Prismen auf der einen Welle (10) gegenüber dem Prisma ($1_2$) bzw. den Prismen auf der anderen Welle (11) in Umfangsrichtung der Wellen (10, 11) gegeneinander versetzt sind und den Prismen ($1_1$, $1_2$) zwei gemeinsame Lichtstrahlen (S) und Strahlempfänger ($9_1$, $9_2$) zugeordnet sind.

4. Vorrichtung nach Anspruch 2, **dadurch gekennzeichnet**, daß das Prisma ($1_3$) bzw. die Prismen auf der einen Welle (10) einerseits und das Prisma ($1_4$) bzw. die Prismen auf der anderen Welle (11) andererseits in unterschiedlichem radialen Abstand bezüglich der Wellen auf diesen angebracht sind und den Prismen ($1_3$, $1_4$) für jede Welle (10, 11) zwei eigene, um 90° gegeneinander versetzte Lichtstrahlen (S) und Strahlempfänger ($9_3$, $9_4$ ; $9'_3$, $9'_4$) zugeordnet sind.

5. Vorrichtung nach Anspruch 4, **dadurch gekennzeichnet**, daß die Prismen ($1_1$, $1_2$) im wesentlichen in gleicher Winkelposition auf den Wellen (10, 11) angebracht sind

6. Vorrichtung nach einem der vorhergehenden Ansprüche, **dadurch gekennzeichnet**, daß die Koordinatenachsen des Koordinatensystems bezüglich der Mittelachse der Wellen radial und senkrecht dazu angeordnet sind und die Strahlempfänger aus zweidimensionalen, analogen, photo-elektrischen Halbleiter-Positionsdetektoren mit entsprechender Koordinatenanordnung bestehen.

7. Vorrichtung nach einem der vorhergehenden Ansprüche, **dadurch gekennzeichnet**, daß den Strahlempfängern (9) Linsen zur Verkleinerung der Lichtstrahlauslenkung vorgeschaltet sind.

## Claims

1. Device for ascertaining and monitoring of charges in the position of the rotational axis of a shaft, which rotates in a fixed spatial reference system, relative to an initial position, wherein for the separate ascertaining of a posible parallel displacement and of a possible angular displacement of the shaft, a respective parallelly focused light beam, which displays a small diameter and is emitted outside the shaft and parallelly thereto in measurement positions, which are displaced through substantially 90° in circumferential direction of the shaft, is directed onto a rectangular prism, which is fast with the shaft and by its hypotenuse plane faces the light beam, or onto an optical system like such, the apex of which extends substantially perpendicularly to a radial plane of the shaft and which reflects the light beam as reflected beam directly or indirectly to a beam receiver which produces two signals which respectively correspond to the x and y coordinates of the spacing of the point of incidence of the reflected beam from the zero point of a planar rectangular co-ordinate system, the plane of which lies - directly or virtually - transversely to the rotational axis of the shaft, characterised thereby, that a separate light beam (S) as well as a separate beam receiver ($9_1$, $9_2$, $9_3$, $9_4$, $9_{3'}$, $9_{4'}$), which receives the reflected beam (S') produced or the passage of the light beam (S) through the prism, are each respectively associated fixed in space with each measurement position.

2. Device according to claim 1 for ascertaining and moritoring of charges in the mutual position of two shafts, which are arranged one behind the other with substantially aligned rotational axes, for example of the shafts one coupled elastically to the other of two separately mounted machines, relative to an initial position, characterised thereby, that at least one prism ($1_1$, $1_2$ ; $1_3$, $1_4$), which co-operates with two spatially fixed light beams (S) and beam receivers ($9_1$, $9_2$, $9_3$, $9_4$ ; $9_{3'}$, $9_{4'}$), is mounted or each shaft (10, 11).

3. Device according to claim 2, characterised thereby, that the prisms ($1_1$, $1_2$) have substantially the same radial spacing from their shaft (10 or 11), the prism ($1_1$) or the prisms on the one shaft (10) are displaced in circumferential direction of the shafts (10, 11) relative to the prism ($1_2$) or the prisms on the other shaft (11) and two common light beams (S) and beam receivers ($9_1$, $9_2$) are associated with the prisms ($1_1$, $1_2$).

4. Device according to claim 2, characterised thereby, that the prism ($1_3$) or the prisms on the one shaft (10) on the one hand and the prism ($1_4$) or the prisms on the other shaft (11) on the other hand are mounted on the shafts at different radial spacing with respect to the shafts and two own light beams (S) and beam receivers ($9_3$, $9_4$ ; $9_{3'}$, $9_{4'}$), each displaced through 90° to the other, for each shaft (10, 11), are associated with the prisms ($1_3$, $1_4$).

5. Device according to claim 4, characterised thereby, that the prisms ($1_1$, $1_2$) are mounted on the shafts (10, 11) in substantially the same angular position.

6. Device according to one of the preceding claims, characterised thereby, that the co-ordinate axes of the co-ordinate system are arranged radially with respect to the central axis of the shafts and perpendicularly thereto and the beam receivers consist of two-dimensional analog photo-electric semiconductor position detectors with appropriate co-ordinate arrangement.

7. Device according to one of the preceding claims, characterised thereby, that lenses for reduction of the light beam deflection are connected in front of the beam receivers (9).

## Revendications

1. Dispositif pour déterminer et contrôler des variations de la position de l'axe de rotation d'un arbre tournant dans un système spatial fixe de référence par rapport à une position de départ, et dans lequel pour une détermination particulière d'un décalage parallèle éventuel et d'un décalage angulaire éventuel de l'arbre, dans des positions de mesure qui sont décalées sensiblement de 90° dans la direction circonférentielle de l'arbre, respectivement un faisceau de lumière focalisé parallèlement, possédant un faible diamètre et émis à l'extérieur de l'arbre et sensiblement parallèlement à ce dernier, est dirigé sur un prisme rectangulaire solidaire de l'arbre et dont le plan passant par son hypoténuse est tourné vers le faisceau de lumière, ou un système optique agissant en tant que tel, dont le sommet s'étend sensiblement perpendiculairement à un plan radial de l'arbre et qui réfléchit le faisceau de lumière sous la forme d'un faisceau réfléchi, directement ou indirectement en direction d'un récepteur de rayonnement qui produit deux signaux qui correspondent aux coordonnées x et y de la distance entre le point d'impact du faisceau réfléchi et l'origine d'un système plan de coordonnées rectangulaires, dont le plan est directement ou virtuellement transversalement à l'axe de rotation de l'arbre, caractérisé par le fait qu'à chaque position de mesure sont associés respectivement, d'une manière fixe dans l'espace, un faisceau de lumière particulier (S) ainsi qu'un récepteur particulier du faisceau ($9_1$, $9_2$, $9_3$, $9_4$), qui reçoit le faisceau réfléchi (S') produit par le faisceau de lumière (S), lors de la traversée du prisme.

2. Dispositif suivant la revendication 1 pour déterminer et contrôler des variations de la position réciproque de deux arbres disposés l'un derrière l'autre et possédant des axes de rotation sensiblement alignés, par exemple les arbres, accouplés élastiquement l'un à l'autre, de deux machines montées séparément, par rapport à une position de départ, caractérisé par le fait que sur chaque arbre (10, 11) est installé au moins un prisme ($1_1$, $1_2$ ; $1_3$, $1_4$) qui coopère avec deux faisceaux de lumière (S) et deux récepteurs de rayonnement ($9_1$, $9_2$ ; $9_3$, $9_4$) fixes dans l'espace.

3. Dispositif suivant la revendication 2, caractérisé par le fait que les prismes ($1_1$, $1_2$) sont séparés de leurs arbres (10 et 11) sensiblement par une même distance radiale, le prisme ($1_1$) ou les prismes situés sur l'un des arbres (10) sont décalés par rapport au prisme ($1_2$) ou aux prismes situés sur l'autre arbre (11) dans la direction circonférentielle des arbres (10, 11), et deux faisceaux de lumière communs (S) et deux récepteurs de rayonnement ($9_1$, $9_2$) sont associés aux prismes (11, 12).

4. Dispositif suivant la revendication 2, caractérisé par le fait que le prisme ($1_3$) ou les prismes situés sur l'un des arbres (10), d'une part, et le prisme ($1_4$), d'autre part, ou les prismes situés sur l'autre arbre (11), d'autre part, sont disposés sur les arbres à des distances radiales différentes de ces derniers et qu'aux prismes ($1_3$, $1_4$) prévus pour chaque arbre (10, 11) sont associés deux faisceaux de lumière (S) et deux récepteurs de rayonnement ($9_3$, $9_4$ ; $9_3$, $9_4$), décalés de 90° l'un par rapport à l'autre.

5. Dispositif suivant la revendication 4, caractérisé par le fait que les prismes ($1_1$, $1_2$) sont disposés sensiblement dans la même position angulaire sur les arbres (10, 11).

6. Dispositif suivant l'une des revendications précédentes, caractérisé par le fait que les axes de coordonnées du système de coordonnées sont disposés radialement et perpendiculairement à l'axe médian des arbres et que les récepteurs de rayonnement sont constitués par des détecteurs analogiques photoélectriques de position de semiconducteurs bi-dimensionnels, comportant un système de coordonnées correspondant.

7. Dispositif suivant l'une des revendications précédentes, caractérisé par le fait que des lentilles servant à réduire la déviation du faisceau de lumière sont montées en amont des récepteurs de rayonnement (9).

Fig. 1

Fig. 2

Fig.4

Fig.3

Fig.5

Fig. 6

Fig. 7

Fig. 8

Fig. 9

Fig. 10

Fig. 11